# EUROPÄISCHE PATENTSCHRIFT

(11) **EP 2 185 391 B1**
(45) Veröffentlichungstag und Bekanntmachung des Hinweises auf die Patenterteilung: **19.01.2011**
(21) Anmeldenummer: 08802734.7
(22) Anmeldetag: 01.10.2008
(51) Int. Cl.: B60T 13/57

(54) **UNTERDRUCKBREMSKRAFTVERSTÄRKER FÜR EINE KRAFTFAHRZEUGBREMSANLAGE**
VACUUM BRAKE BOOSTER FOR A MOTOR-VEHICLE BRAKE SYSTEM
SERVO-FREIN À DÉPRESSION POUR UN SYSTÈME DE FREINAGE DE VÉHICULE AUTOMOBILE

(30) Priorität: 12.10.2007 DE 102007049122
(43) Veröffentlichungstag der Anmeldung: 19.05.2010
(73) Patentinhaber: Lucas Automotive GmbH, 56070 Koblenz (DE)
(72) Erfinder: SCHLÜTER, Peter, verstorben (DE)
(74) Vertreter: Thum, Bernhard
(86) Internationale Anmeldenummer: PCT/EP2008/008318
(87) Internationale Veröffentlichungsnummer: WO 2009/049772

(56) Entgegenhaltungen:
- WO-A-96/41738
- DE-A1- 4 227 879
- DE-A1- 19 750 514

## Beschreibung

Die vorliegenden Erfindung betrifft einen Unterdruckbremskraftverstrker für eine Kraftfahrzeugbremsanlage, mit einem Krafteingangsglied, das mit einem Bremspedal koppelbar oder gekoppelt ist, einer Kammeranordnung mit einer Unterdruckkammer und einer Arbeitskammer, die über eine bewegliche Wand voneinander getrennt sind, einem Steuerventil mit einem Ventilglied zum wahlweisen Verbinden und Trennen von Unterdruckkammer und Arbeitskammer und einem Kraftausgangsglied zum Übertragen einer Ausgangskraft auf einen Hauptbremszylinder, wobei das Krafteingangsglied mit einer in dem Steuerventil angeordneten Übertragungskolbenanordnung kraftübertragend koppelbar oder gekoppelt ist, wobei nach Maßgabe einer Verlagerung der Übertragungskolbenanordnung entlang einer Längsachse über das Krafteingangsglied das Steuerventil ansteuerbar ist.

Derartige Unterdruckbremskraftverstärker sind aus dem Stand der Technik bekannt. So zeigt das Dokument DE 40 21 304 A1 einen Unterdruckbremskraftverstärker, bei dem über das Krafteingangsglied die Übertragungskolbenanordnung gegen den Widerstand einer Rückstellfeder verlagerbar ist. An der Übertragungskolbenanordnung ist ein erster Ventilsitz vorgesehen, der mit einem Ventilglied zusammenwirkt. Durch die Verlagerung der Übertragungskolbenanordnung wird dieser Ventilsitz von dem Ventilglied abgehoben, so dass es zu einer Verbindung der Arbeitskammer mit der Atmosphäre und dadurch zu einem Druckaufbau an der beweglichen Wand kommt. In Folge der an der beweglichen Wand anliegenden Druckdifferenz wird das Steuerventilgehäuse entsprechend nachverlagert, bis sich der geöffnete Ventilsitz wieder schließt. Der Unterdruckbremskraftverstärker befindet sich dann wieder in einem Gleichgewichtszustand, wobei eine der Verlagerung des Krafteingangsglied entsprechende Ausgangskraft über das Kraftausgangsglied an eine Hauptbremszylinderanordnung übertragen wird. Wird das Krafteingangsglied wieder freigegeben, so wird dieses aufgrund der Wirkung der Rückstellfeder zusammen mit der Übertragungskolbenanordnung in Richtung seiner Ausgangsstellung zurückbewegt. Dabei wird ein zweiter Ventilsitz geöffnet, wodurch ein Druckausgleich zwischen der Unterdruckkammer und der Arbeitskammer erfolgen kann. In der Folge bewegt sich das Steuerventilgehäuse wieder zurück in seine Ausgangsstellung. Die Rückstellfeder muss hierfür so ausgelegt sein, dass sie sämtliche druckbedingt auftretende Gegenkräfte überwindet.

Ein wesentlicher Nachteil dieses Unterdruckbremskraftverstärkers besteht darin, dass im Betrieb am Ventilglied ein Differenzdruck anliegt, der daher rührt, dass an einer dem Krafteingangsglied zugewandten Seite des Ventilglieds dauerhaft Atmosphärendruck anliegt, wohingegen bei einer Bremspedalbetätigung an der entgegengesetzten Seite des Ventilglieds der in der Arbeitskammer herrschende Druck anliegt. Dieser Druck ist in vielen Betriebssituationen geringer als Atmosphärendruck, woraus sich der Differenzdruck am Ventilglied ergibt. Beim Zurückführen des Steuerventilgehäuses in seine Ausgangsstellung wirkt dieser Differenzdruck einer Bewegung des Ventilglieds entgegen. Er muss überwunden werden, um den zweiten Ventilsitz zu öffnen. Da die Rückstellbewegung allein von der Rückstellfeder bewirkt wird, muss diese eine hinreichend große Federkonstante aufweisen. Dies bedeutet aber wiederum, dass auch entsprechend hohe Kräfte zur Betätigung des Unterdruckbremskraftverstärkers und der damit verbundenen Komprimierung der Rückstellfeder erforderlich sind. Mit anderen Worten bedingt der am Ventilglied anliegende Differenzdruck eine Erhöhung der Betätigungskräfte und beeinflusst damit das Ansprechverhalten dieses Unterdruckbremskraftverstärkers. Dies steht der Forderung nach einer komfortablen Betätigung des Bremssystems entgegen.

Zum weiteren Stand der Technik wird auf die Dokumente EP 0 830 276 B1 und EP 0 655 039 B2 verwiesen. Auch diese Dokumente zeigen jeweils Unterdruckbremskraftverstärker aus dem Stand der Technik, bei denen ein Krafteingangsglied mit einer Übertragungskolbenanordnung gekoppelt ist, wobei sich an dem Ventilglied im Betrieb ein Differenzdruck aufbauen kann, der zur Erhöhung der aufzubringenden Betätigungskräfte führt.

Um diesem Problem der hohen Betätigungskräfte zu begegnen, schlägt das Dokument DE 42 27 879 A1 vor, in einem balgartig ausgebildeten Ventilglied eine Mehrzahl von axialen Öffnungen vorzusehen, über die ein Druckausgleich stattfinden kann. Dadurch muss aber das aus Elastomermaterial hergestellte Ventilglied mehrfach durchbrochen werden und zur Beibehaltung seiner Stabilität anderweitig verstärkt werden. Dennoch wird das Ventilglied aber insgesamt anfälliger für ein Versagen.

Es ist demgegenüber Aufgabe der Erfindung, einen Unterdruckbremskraftverstärker der eingangs bezeichneten Art bereitzustellen, bei dem unter geringem konstruktivem Aufwand ohne Erhöhen der Anfälligkeit für ein Versagen die Betätigungskräfte gegenüber den herkömmlichen aus dem Stand der Technik bekannte Lösungen reduziert werden können.

Diese Aufgabe wird durch einen Unterdruckbremskraftverstärker der eingangs bezeichneten Art gelöst, bei dem die Übertragungskolbenanordnung mit wenigstens einem Druckausgleichkanal versehen ist, über den im Betrieb ein Druckausgleich an dem Ventilglied erfolgt.

Durch die Bereitstellung wenigstens eines Druckausgleichkanals lässt sich erreichen, dass ein sich während des Betriebs ein an dem Ventilglied aufbauender Differenzdruck minimal gehalten oder ein solcher Differenzdruckaufbau sogar ganz unterbunden werden kann, so dass die das Ventilglied im Betrieb im wesentlichen "druckneutral" innerhalb des Steuerventils verlagerbar ist. Dadurch kann vermieden werden, dass die Rückstellfeder so stark ausgebildet werden muss, dass sie bei einer Rückstellbewegung mit ihrer Federkraft auch noch gegen den Differenzdruck ankommen muss. Aufgrund der erfindungsgemäß schwächeren Auslegung der Rückstellfeder erfährt ein Fahrer bei einer Betätigung des Bremspedals geringere Gegenkräfte, was insgesamt eine komfortablere Betätigung ermöglicht. Durch Vermeidung der Ausbildung eines solchen Differenzdrucks aufgrund der Bereitstellung wenigstens eines Druckausgleichkanals in der Übertragungskolbenanordnung, d.h. in einem formstabilen Bauteil, lässt sich zudem vermeiden dass der Unterdruckbremskraftverstärker versagensanfälliger wird. Das aus einem Elastomer hergestellte Ventilglied kann frei von Durchbrüchen ausgebildet sein und ist damit einerseits einfacher zu fertigen und andererseits weniger fehleranfällig.

Bei einer Ausführungsvariante der Erfindung kann vorgesehen sein, dass das Steuerventil ein Steuerventilgehäuse aufweist, wobei die Übertragungskolbenanordnung in dem Steuerventilgehäuse relativ zu diesem und zu dem Ventilglied verlagerbar geführt ist. Das Ventilglied ist dabei beispielsweise balgartig aus einem Elastomer ausgebildet und sorgt für eine dichtende Anlage an korrespondierenden Ventilsitzen. Gemäß einer Ausführungsform der Erfindung ist vorgesehen, dass die Übertragungskolbenanordnung einen axialen Führungsabschnitt aufweist, der in dem Ventilglied dichtend geführt ist. In diesem Zusammenhang kann erfindungsgemäß vorgesehen sein, dass ein erster Druckausgleichkanal in dem Führungsabschnitt vorgesehen ist, der sich im Wesentlichen in axialer Richtung von einem mit der Arbeitskammer verbundenen pneumatischen Bereich in einen ersten von dem Ventilglied begrenzten pneumatischen Bereich erstreckt. Zusätzlich oder alternativ hierzu sieht eine Weiterbildung der Erfindung vor, dass ein zweiter Druckausgleichkanal in dem Führungsabschnitt vorgesehen ist, der sich im Wesentlichen in radialer Richtung von einem mit der Atmosphäre verbundenen pneumatischen Bereich in einen zweiten von dem Ventilglied begrenzten pneumatischen Bereich erstreckt. Dadurch kann das Ventilglied im Wesentlichen druckneutral gehalten werden, wodurch dessen Verlagerung, insbesondere durch eine Rückstellfeder, unter geringerem Kraftaufwand möglich ist.

Um eine dichtende Führung des Führungsabschnitt relativ zu dem Ventilglied zu gewährleisten, kann erfindungsgemäß vorgesehen sein, dass das Ventilglied erste Dichtmittel aufweist, über die der Führungsabschnitt dichtend in dem Ventilglied geführt ist. Das Ventilglied kann seinerseits zweite Dichtmittel aufweisen, mit denen es dichtend in dem Steuerventilgehäuse geführt ist.

Wie vorstehend bereits ausgeführt, kann das Ventilglied balgartig ausgebildet sein, wobei dieses dann einen verschiebbaren Teil und einen in dem Steuerventilgehäuse festgelegten Teil aufweist. In diesem Zusammenhang kann erfindungsgemäß vorgesehen sein, dass das Ventilglied in dem Steuerventilgehäuse über ein Halteelement gehalten ist. Dabei kann der Führungsabschnitt dichtend relativ zu dem Halteelement geführt sein. Hinsichtlich des verschiebbaren Teils kann erfindungsgemäß vorgesehen sein, dass dieser über eine Rückstellfeder in eine Ausgangsstellung vorgespannt ist.

Alternativ zu einem balgartig ausgeführten integralen Ventilglied, kann dieses auch mehrteilig ausgeführt sein. So sieht eine Weiterbildung der Erfindung vor, dass das Ventilglied ein formstabiles Trägerelement mit einem elastomeren Überzug aufweist, wobei das Ventilglied mit dem Halteelement zusammen wirkt. Anders als bei dem balgartig ausgeführten Ventilglied wird die Abdichtung gegenüber dem Steuerventilgehäuse beispielsweise dadurch erreicht, dass an dem Halteelement zusätzliche Dichtungsmittel angebracht sind.

Vorstehend wurde bereits angedeutet, dass die erfindungsgemäße Unterdruckbremskraftverstärker, ebenso wie herkömmliche Unterdruckbremskraftverstärker, zwei Dichtsitze aufweist, über die die Arbeitskammer wahlweise mit der Unterdruckkammer oder mit der Umgebungsatmosphäre verbunden werden kann. In diesem Zusammenhang sieht eine Ausführungsform der Erfindung vor, dass ein erster Dichtsitz an dem Steuerventilgehäuse zur Wechselwirkung mit dem Ventilglied vorgesehen ist und dass ein zweiter Dichtsitz an einer Komponente von Übertragungskolbenanordnung oder Ventilglied zur Wechselwirkung mit der jeweils anderen Komponente von Übertragungskolbenanordnung oder Ventilglied vorgesehen ist. Die Geometrie der Ventilsitze kann erfindungsgemäß unterschiedlich gewählt werden. So können die Ventilsitze jeweils in Form eines umlaufenden Ringvorsprungs am Steuerventilgehäuse oder an der Übertragungskolbenanordnung ausgebildet sein und mit einer korrespondierenden planaren Dichtfläche am Ventilglied dichtend zusammenwirken. Alternativ kann aber auch vorgesehen sein, dass am Steuerventilgehäuse oder/und an der Übertragungskolbenanordnung planare Dirchtflächen vorgesehen sind, wobei entsprechende dichtende Vorsprünge oder Kanten am Ventilglied ausgebildet sind.

Hinsichtlich der Gestaltung des Führungsabschnitts bezüglich der Übertragungskolbenanordnung kann vorgesehen sein, dass diese integral miteinander ausgebildet sind. Alternativ hierzu kann die Übertragungskolbenanordnung aber auch mehrteilig ausgebildet sein, beispielsweise derart, dass der Führungsabschnitt als separates Bauteil getrennt von der Übertragungskolbenanordnung ausgebildet, jedoch dichtend mit dieser verbunden ist. Dadurch kann die Herstellung der Übertragungskolbenanordnung insgesamt vereinfacht werden, weil beispielsweise die verhältnismäßig komplexe Geometrie des mechanisch weniger stark belasteten Führungsabschnitts durch ein hierfür bevorzugt geeignetes Herstellungsverfahren, wie beispielsweise Spritzgießen, hergestellt werden kann. Das aufgrund der Druckbelastung während der Betätigung mechanisch stärker belastete Kolbenelement, das im Betrieb mit einem gummielastischen Reaktionsglied in Wechselwirkung tritt, lässt sich dann beispielsweise als entsprechend massives Bauteil gestalten. In diesem Zusammenhang kann ferner vorgesehen sein, dass der Führungsabschnitt und die Übertragungskolbenanordnung aus verschiedenen Materialien hergestellt sind.

Bei mehrteiliger Ausbildung der Übertragungskolbenanordnung ist es erforderlich, die einzelnen Teile zuverlässig und dichtend miteinander zu verbinden. Gemäß einer Variante der Erfindung weist die Übertragungskolbenanordnung eine Befestigungsformation zum dichtenden Aufnehmen des Führungsabschnitts auf. So kann der buchsenartig ausgebildete Führungsabschnitt beispielsweise in eine auf diesen abgestimmte ringförmige Ausnehmung in der Übertragungskolbenanordnung eingesteckt werden. Gegebenenfalls kann hierfür zusätzlich eine Bördelfixierung vorgesehen sein, um dem Führungsabschnitt sicher an der Übertragungskolbenanordnung zu fixieren.

Um eine hinreichende Abdichtung im Falle einer mehrteilig aufgebauten Übertragungskolbenanordnung zu gewährleisten, kann vorgesehen sein, dass zwischen der Übertragungskolbenanordnung und dem Führungsabschnitt im Bereich der Befestigungsformation wenigstens ein Dichtelement vorgesehen ist.

Die Erfindung wird im Folgenden beispielhaft mit Bezug auf die beiliegenden Figuren beschrieben. Es stellen dar:
- Figur: 1 eine Übersichtsdarstellung eines ersten Ausführungsbeispiels eines erfin- dungsgemäßen Unterdruckbremskraftverstärkers im achsenthaltenden Längsschnitt;
- Figur 2: eine Detailansicht des Steuerventils gemäß dem ersten Ausführungsbei- spiel der Erfindung nach Figur 1;
- Figur 3: eine Ansicht entsprechend Figur 2 eines zweiten Ausführungsbeispiels der Erfindung;
- Figur 4: eine Ansicht entsprechend Figur 2 eines dritten Ausführungsbeispiels der Erfindung;
- Figur 5: eine Ansicht entsprechend Figur 2 eines vierten Ausführungsbeispiels der Erfindung;
- Figur 6: eine Ansicht entsprechend Figur 2 eines fünften Ausführungsbeispiels der Erfindung und
- Figur 7: eine Ansicht entsprechend Figur 2 eines sechsten Ausführungsbeispiels der Erfindung.

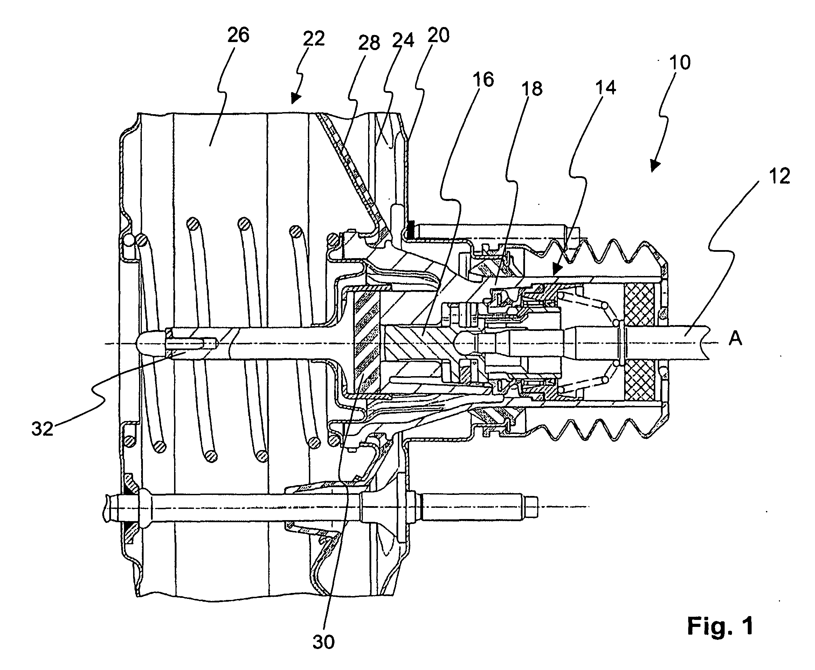

In Figur 1 ist ein erfindungsgemäßer Unterdruckbremskraftverstärker in einer eine Längsachse A enthaltenden Schnittansicht gezeigt und allgemein mit 10 bezeichnet. Dieser umfasst ein Krafteingangsglied 12, das mit einem nicht gezeigten Bremspedal zur Betätigung gekoppelt ist. Das Krafteingangsglied 12 ragt in ein Steuerventil 14 hinein und ist mit einer in diesem entlang der Längsachse A verlagerbar geführten Übertragungskolbenanordnung 16 zur gemeinsamen Bewegung gekoppelt.

Das Steuerventil 14 weist ein Steuerventilgehäuse 18 auf, welches in einem Verstärkergehäuse 20 entlang der Längsachse A verlagerbar geführt ist. In dem Verstärkergehäuse 20 ist eine Kammeranordnung 22 vorgesehen, die eine Arbeitskammer 24 und eine Unterdruckkammer 26 aufweist, wobei die Arbeitskammer 24 von der Unterdruckkammer 26 über eine bewegliche Wand 28 getrennt ist. Die bewegliche Wand 28 ist fest mit dem Steuerventilgehäuse 18 zur gemeinsamen Bewegung verbunden. Eine solche Bewegung des Steuerventilgehäuses 18 sowie eine durch eine Bewegung des Krafteingangsglied 12 induzierte Bewegung der Übertragungskolbenanordnung 16 wird unter Vermittlung eines gummielastischen Reaktionsglieds 30 auf ein Kraftausgangsglied 32 übertragen. Dieses ist mit einer nicht gezeigten Hauptbremszylinderanordnung kraftübertragend verbindbar.

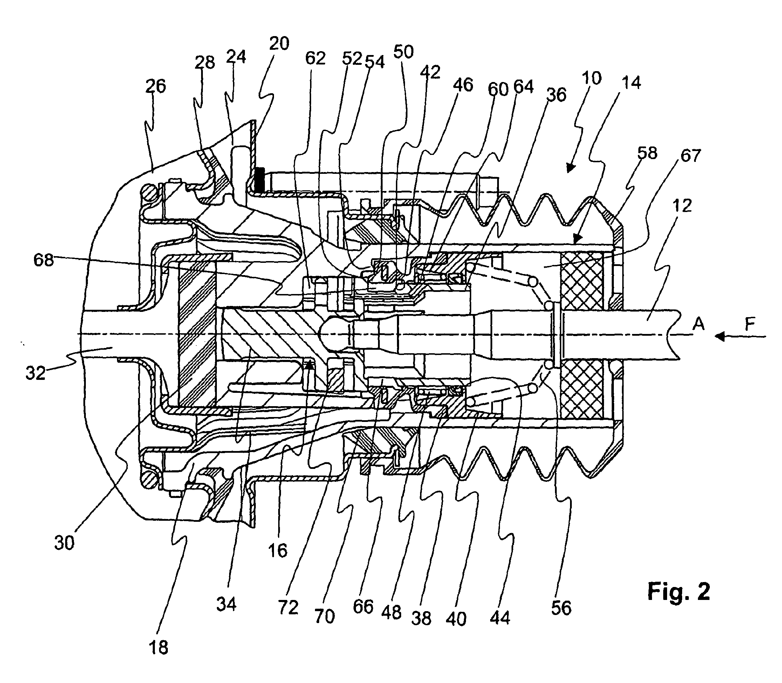

Im Folgenden wird unter Bezugnahme auf Figur 2 im Detail auf den Aufbau des Steuerventils 14 der ersten erfindungsgemäßen Ausführungsform eingegangen.

Man erkennt in Figur 2, dass in dem Steuerventilgehäuse 18 die Übertragungskolbenanordnung 16 verlagerbar geführt ist. Sie weist an ihrem in Figur 2 linken Ende einen Kolbenabschnitt 34 auf, der in einer Durchgangsöffnung in dem Steuerventilgehäuse 18 verlagerbar geführt ist. Dieser Kolbenabschnitt 34 taucht in bekannter Weise bei einer Betätigung in das gummielastische Reaktionsglied 30 ein und überträgt über dessen quasi-fluidisches Verhalten eine an dem Krafteingangsglied 12 anliegende Betätigungskraft F auf das Kraftausgangsglied 32.

Ferner weist die Übertragungskolbenanordnung 16 einen Führungsabschnitt 36 auf, der integral mit dem Kolbenabschnitt 34 verbunden ist. Der Führungsabschnitt 36 ist in einem Ventilglied 38 sowie in einem dieses im Steuerventilgehäuse 18 festlegenden Halteelement 40 dichtend verlagerbar geführt. Hierzu ist an dem Ventilglied 38 in einem flexiblen balgartigen Bereich eine Dichtlippe 42 vorgesehen, die auf einer zylindrischen Außenoberfläche des Führungsabschnitts 36 dichtend abgleitet. Ferner ist in dem Halteelement 40 ein weiteres Dichtelement 44 vorgesehen, welches ebenfalls dichtend mit der zylindrischen Außenoberfläche des Führungsabschnitts 36 zusammenwirkt. Man erkennt, dass der flexible balgartige Abschnitt 46 des Ventilglieds 38 über ein Federelement 48 in Figur 2 nach links vorgespannt ist. Am Ende des Ventilglieds 38 weist dieses eine ringförmige Dichtlippe 50 auf, die einen ersten (inneren) Dichtsitz bildet und mit einer korrespondierenden Anlagefläche 52 an der Übertragungskolbenanordnung 16 in der in Figur 2 gezeigten Ausgangsstellung in dichtender Anlage steht. Ferner weist das Ventilglied 38 radial außerhalb der Dichtlippe 50 einen radialen Flächenabschnitt auf, der in dichtende Anlage mit einem ringförmigen Vorsprung 54 in der in Figur 2 gezeigten Stellung gebracht ist. Der ringförmige Vorsprung 54 bildet einen äußeren Dichtsitz. Der innere Dichtsitz 50 trennt bei dichtender Anlage an der Übertragungskolbenanordnung 16 die Arbeitskammer 24 von der Umgebungsatmosphäre. Der äußere Dichtsitz 54 trennt bei dichtender Anlage an dem Ventilglied 38 die Arbeitskammer 24 von der Unterdruckkammer 26.

Ferner erkennt man, dass das Halteelement 40 über eine Federanordnung 56 in der in Figur 2 gezeigten Stellung gehalten wird und den radial äußeren Abschnitt des Ventilglieds 38 gegen eine korrespondierende Schulter im Steuerventilgehäuse 14 drückt. Die Federanordnung 56 wirkt zugleich als Rückstellfeder für das Krafteingangsglied 12. Dieses ist in einem Schutzbalg 58 aufgenommen, der mit dem Verstärkergehäuse 20 verbunden ist und das Steuerventil 14 gegen äußere Einflüsse abschirmt.

In dem in Figuren 1 und 2 gezeigten Ausführungsbeispiel ist in dem Führungsabschnitt 36 ein in axialer Richtung verlaufender Druckausgleichkanal 60 vorgesehen, der eine Verbindung zwischen einem mit der Arbeitskammer 24 fluidisch verbundenen pneumatischen Aufnahmebereich 62 und einem von dem Ventilglied 38 teilweise begrenzten Bereich 64 schafft, in dem die Feder 48 angeordnet ist. Ferner ist ein radialer Druckausgleichkanal 66 vorgesehen, der einen Druckausgleich zwischen einem mit der Atmosphäre verbundenen zentralen pneumatischen Bereich 67 des Steuerventils 14, in dem das Krafteingangsglied 12 angeordnet ist, und dem radial innerhalb des Ventilglieds 38 liegenden von diesem teilweise begrenzten pneumatischen Ringbereich 68 schafft.

Schließlich erkennt man in Figur 2 noch ein Dichtelement 70, das innerhalb des Verstärkergehäuses 20 angeordnet ist und für eine dichtende Führung des Steuerventilgehäuses 18 in dem Verstärkergehäuse 20 sorgt. Ferner erkennt man einen an sich bekannten Anschlagriegel 72, der in der in Figur 2 gezeigten Stellung an einer im Verstärkergehäuse 20 ausgebildeten Anschlagschulter anliegt und so die Bewegung der Übertragungskolbenanordnung 34 in Figur 2 nach rechts relativ zu dem Verstärkergehäuse 20 begrenzt.

Der Unterdruckbremskraftverstärker 10 gemäß Figuren 1 und 2 funktioniert wie ein an sich bekannter Unterdruckbremskraftverstärker. In Folge einer Betätigung des nicht gezeigten Bremspedals wird das Krafteingangsglied 12 zusammen mit der Übertragungskolbenanordnung 16 in Figur 2 nach links verlagert. Dadurch wird die Anlagefläche 52 der Übertragungskolbenanordnung 16 von dem inneren Dichtsitz 50 abgehoben, so dass es zu einer Verbindung zwischen der Arbeitskammer 24 und der Umgebungsatmosphäre kommt. An der beweglichen Wand 28 baut sich in der Folge ein Überdruck gegenüber dem in der Unterdruckkammer 26 herrschenden Unterdruck auf, der zu einer Nachrückverlagerung des Verstärkergehäuses 18 führt. In der Folge wird auf das Kraftausgangsglied 32 sowohl die über das Krafteingangsglied 12 ausgeübte Betätigungskraft F als auch eine Verstärkerkraft übertragen, die sich aus der an der beweglichen Wand 28 anliegenden Druckdifferenz ergibt. Das Steuerventilgehäuse 18 rückt demzufolge soweit nach, bis sich der Dichtsitz 50 wieder an die Fläche 52 anlegt. Sodann befindet sich der Unterdruckbremskraftverstärker 10 in einer Gleichgewichtsstellung, die einer bestimmten Betätigungskraft entspricht und aus der ein bestimmte Bremskraft resultiert. Wird das Krafteingangsglied 12 weiter betätigt, das heißt wird das Bremspedal tiefer niedergedrückt, so laufen - ausgehend von dieser Gleichgewichtsstellung - die eben geschilderten Vorgänge erneut ab.

Sobald das Krafteingangsglied 12 wieder freigegeben wird, kommt es aufgrund der am Kraftausgangsglied 32 von der nicht gezeigten Hauptbremszylinderanordnung herrührenden Rückstellkräfte sowie aufgrund der Rückstellwirkung der Rückstellfeder 56 zu einer rückwärtigen Bewegung der Übertragungskolbenanordnung 16 zusammen mit dem Krafteingangsglied 12. Dadurch wird der flexible Teil des Ventilglieds 38 in Figur 2 nach rechts mitgenommen, so dass sich dieser von dem Dichtsitz 54 abhebt. Dies erfolgt im Unterschied zu herkömmlichen Unterdruckbremskraftverstärkern aus dem Stand der Technik ohne großen Kraftaufwand an dem Ventilglied 38, weil dieses aufgrund eines Druckausgleichs über die Druckausgleichskanäle 60 und 66 im Führungsabschnitt 36 im wesentlichen druckneutral ist. Mit anderen Worten liegen an dem Ventilglied keine dessen Verlagerung entgegenwirkende Differenzdrücke an.

Durch Öffnen des Dichtsitzes 54 wird die Unterdruckkammer 26 mit der Arbeitskammer 24 verbunden, so dass die Druckdifferenz an der beweglichen Wand 28 abgebaut wird und ein Druckausgleich auf das Druckniveau der Unterdruckkammer 26 erfolgen kann. Dies führt zu einer Rückwärtsbewegung der beweglichen Wand 28 zusammen mit dem Steuerventilgehäuse 18, bis sich der Ventilsitz 54 wieder an das Ventilglied 38 anlegt. Der Unterdruckbremskraftverstärker 10 kehrt dann in seine in Figur 2 gezeigte Ausgangsstellung zurück.

Der Vorteil der vorliegenden Erfindung hinsichtlich der Ausbildung der Übertragungskolbenanordnung 16 mit einem Führungsabschnitt 36, in dem die Druckausgleichkanäle 60 und 66 angeordnet sind, liegt also darin, dass das Ventilglied 38 im Wesentlichen druckneutral in dem Steuerventilgehäuse 18 geführt ist, und zwar unabhängig vom jeweiligen Betriebszustand. Dies bedeutet, dass sich in dem pneumatischen Bereich 64 nicht etwa ein Differenzdruck ausbilden kann, wie dies beim Stand der Technik der Fall ist, der durch stärkeres Auslegen der Rückstellfeder 56 bei einer Rückstellbewegung überwunden werden muss. Vielmehr findet durch die Druckausgleichkanäle 60 und 66 ein Druckausgleich statt, so dass sich an dem Ventilglied 38 kein Differenzdruck ausbilden kann, der einer Rückstellbewegung entgegen wirkt. Dadurch kann aber auch die Rückstellfeder 56 schwächer ausgelegt werden, wodurch die für den Fahrer spürbaren Gesamtbetätigungskräfte reduziert werden können. Das unerwünschte Auftreten erhöhter Ansprechkräfte, wie sie beim Stand der Technik auftreten können, kann somit durch Bereitstellung der Druckausgleichkanäle 60 und 66 unterbunden werden. Mit anderen Worten können druckabhängige Störgrößen, die je nach Betätigungssituation bei Systemen aus dem Stand der Technik auftreten können, mit der vorliegenden Erfindung vermieden werden.

Die Ausbildung der Druckausgleichkanäle in dem Führungsabschnitt 36 erlaubt es die oben genannten Maßnahmen zu erreichen, ohne das Ventilglied zu schwächen oder anderweitig aufwändig umzugestalten.

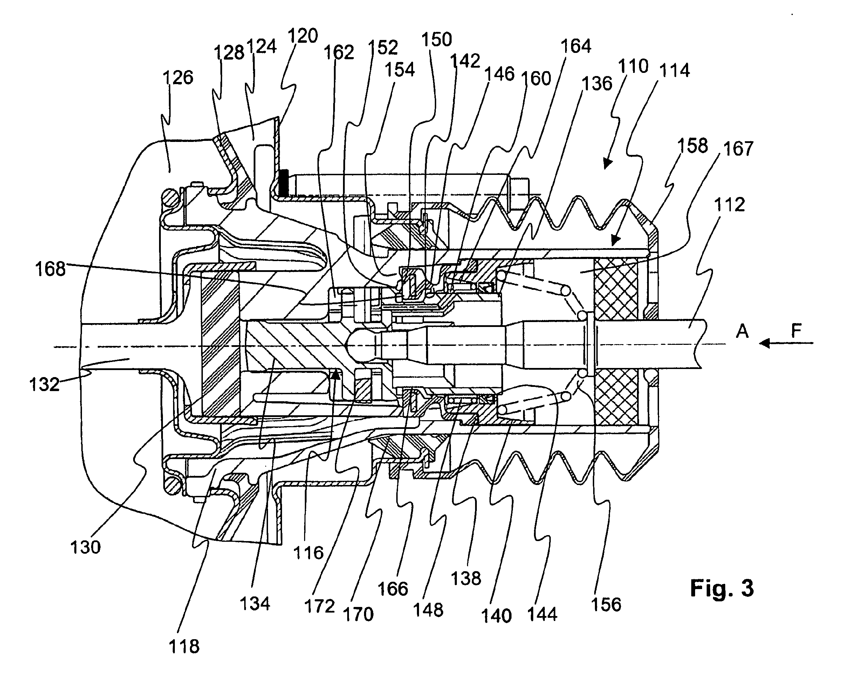

In Figur 3 ist ein zweites Ausführungsbeispiel der Erfindung dargestellt, das im Folgenden beschrieben werden soll. Zur Vermeidung von Wiederholungen und zur Vereinfachung der Beschreibung werden dieselben Bezugszeichen verwendet, wie im Rahmen der Beschreibung von Figur 1, jedoch mit der Ziffer "1" vorangestellt.

Die Ausführungsform gemäß Figur 3 unterscheidet sich von der Ausführungsform gemäß Figur 2 lediglich darin, dass das Ventilglied 138 an seiner in Figur 3 rechten radialen Fläche ohne axialen Dichtsitz 50 ausgebildet ist. Stattdessen weist die Übertragungskolbenanordnung 116 einen radial umlaufenden Ringvorsprung 150 auf, der ähnlich wie der Vorsprung 54 am Steuerventilgehäuse 18 als Dichtsitz wirkt und an der planaren in radialer Richtung verlaufenden Dichtfläche des Ventilglieds 138 dichtend anliegt. Dadurch kann das Ventilglied 138 gegenüber dem ersten Ausführungsbeispiel mit vereinfachter Geometrie ausgebildet werden.

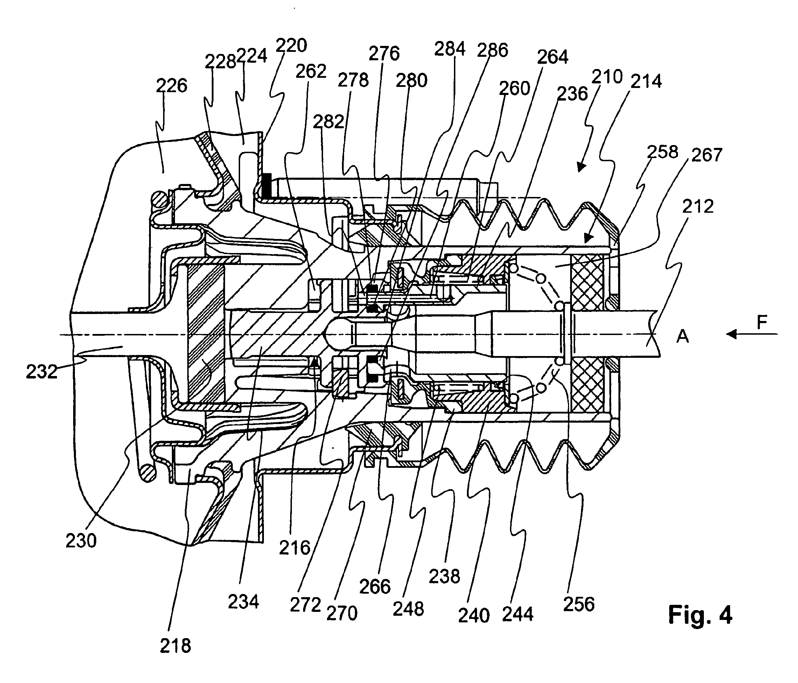

Figur 4 zeigt eine weitere Ausführungsform der Erfindung. Wiederum werden für gleichartige oder gleichwirkende Komponenten dieselben Bezugzeichen verwendet, wie bei der Ausführungsform gemäß Figuren 1 und 2, jedoch mit der Ziffer "2" vorangestellt.

Die Ausführungsform gemäß Figur 4 unterscheidet sich von der Ausführungsform gemäß Figur 3 im Wesentlichen dadurch, dass die Übertragungskolbenanordnung 216 zweiteilig ausgebildet ist. Sie umfasst einen Kolbenabschnitt 234, der mit dem gummielastischen Reaktionsglied 230 zusammen wirkt sowie den Führungsabschnitt 236, der separat von dem Kolbenabschnitt 234 ausgebildet ist. Der Führungsabschnitt 236 ist aber in einer ringförmigen Ausnehmung 276 aufgenommen, die in einem entsprechenden Aufnahmeabschnitt am rechten Ende des Kolbenabschnitts 34 ausgebildet ist. In dieser sind zwei Dichtringe 278 und 280 aufgenommen, die für eine dichtende Anlage zwischen dem Kolbenabschnitt 234 und dem Führungsabschnitt 236 sorgen. In dem Führungsabschnitt 236 ist der Druckausgleichkanal 260 ausgebildet, der sich abgesehen von einer in den Raum 264 mündenden radialen Anschlussbohrung in axialer Richtung erstreckt. Um eine Verbindung mit dem Aufnahmeraum 262 zu schaffen, ist in dem Kolbenabschnitt 234 an seinem in Figur 4 rechten Ende eine Axialbohrung 282 vorgesehen. Schließlich ist ein sich in Figur 4 axial erstreckender Halsbereich am rechten Ende des Kolbenabschnitts 234, auf den der Führungsabschnitt 236 aufgesteckt ist, mit einer Bördelung 284 versehen, die dazu dient, um einen korrespondierenden Ringabschnitt 286 am Führungsabschnitt 236 gegen ein axiales Lösen vom Kolbenabschnitt 234 zu sichern.

Ansonsten funktioniert der Unterdruckbremskraftverstärker 210 gemäß Figur 4 genauso, wie mit Bezug auf Figuren 1 und 2 beschrieben.

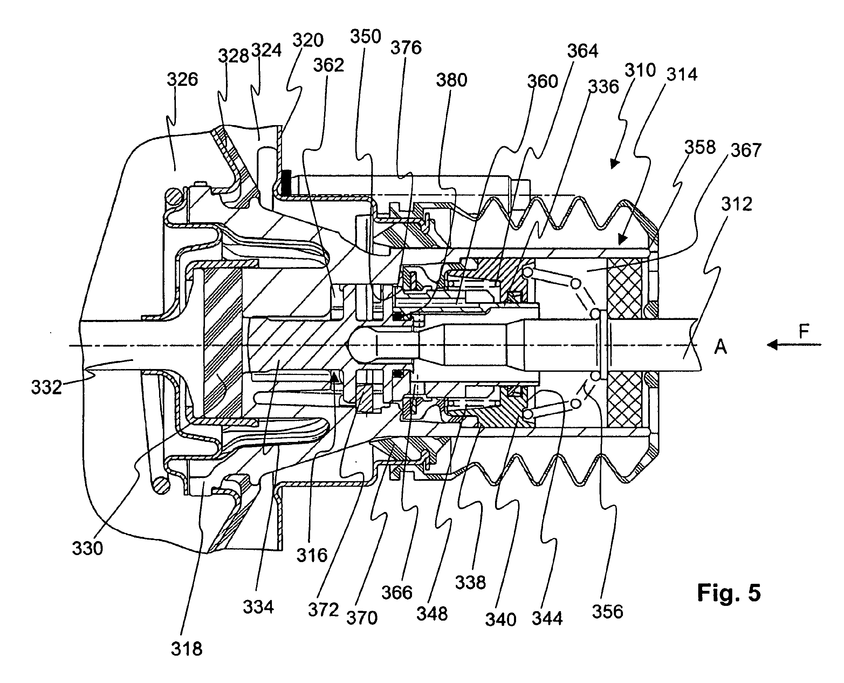

Figur 5 zeigt eine weitere Ausführungsform der Erfindung, wobei wiederum gleichwirkende und gleichartige Komponenten wie bei den vorangehenden Ausführungsbeispielen mit denselben Bezugszeichen - jedoch mit der Ziffer "3" vorangestellt - bezeichnet werden.

Die Ausführungsform gemäß Figur 5 unterscheidet sich von der Ausführungsform gemäß Figur 4 in der Gestaltung des Führungsabschnitts 336, die derart ausgeführt ist, dass sich der Druckausgleichskanal 360 in rein axialer Richtung erstreckt. Ferner erkennt man, dass der Führungsabschnitt 336 mit nur einem Ring 380 dichtend an dem Kolbenabschnitt 334 angebracht ist. Der innere Dichtsitz 350 wird von einer Schrägfläche am Führungsabschnitt 336 gebildet, die mit einer dieser Schrägfläche zugewandten radialen Innenkante des Ventilglieds 338 zusammenwirkt.

Insgesamt lässt sich eine gegenüber Figur 4 vereinfachte Konstruktion erreichen, die ebenso wie die Ausführungsform gemäß Figur 4 den Vorteil bietet, dass für die Komponenten Kolbenabschnitt 234 und Führungsabschnitt 236 verschiedene Materialien verwendet werden können. So ist es möglich, den druckbelasteten Kolbenabschnitt 234 aus einem massiven Material, beispielsweise aus einem belastungsfähigen Kunststoff oder aus Metall herzustellen, wohingegen der an sich nur zu Dichtungszwecken benötigte Führungsabschnitt 336 aus einem Kunststoff einfach durch ein Spritzgießverfahren herstellbar ist.

Ein weiterer Vorteil der Ausführungsform nach Figur 5 besteht darin, dass der rechte Endbereich des Führungsabschnitts 336 mit einem verkleinerten Durchmesser ausgebildet ist. Dadurch wird die Form und Herstellung des Druckausgleichkanals 360 vereinfacht, da dieser nur noch in axialer Richtung verläuft. Am rechten Ende des Druckausgleichkanals 360 ist dieser über einen radial verlaufenden Schlitz fluidisch mit dem Aufnahmeraum 362 dauerhaft verbunden.

Ferner wird durch den verkleinerten Durchmesser des Führungsabschnitts 336 erreicht, dass die Last an der Übertragungskolbenanordnung 316, auf der der Druck der Atmosphäre lastet, verkleinert wird, wodurch die auf die Übertragungskolbenanordnung 316 wirkende Last reduziert wird.

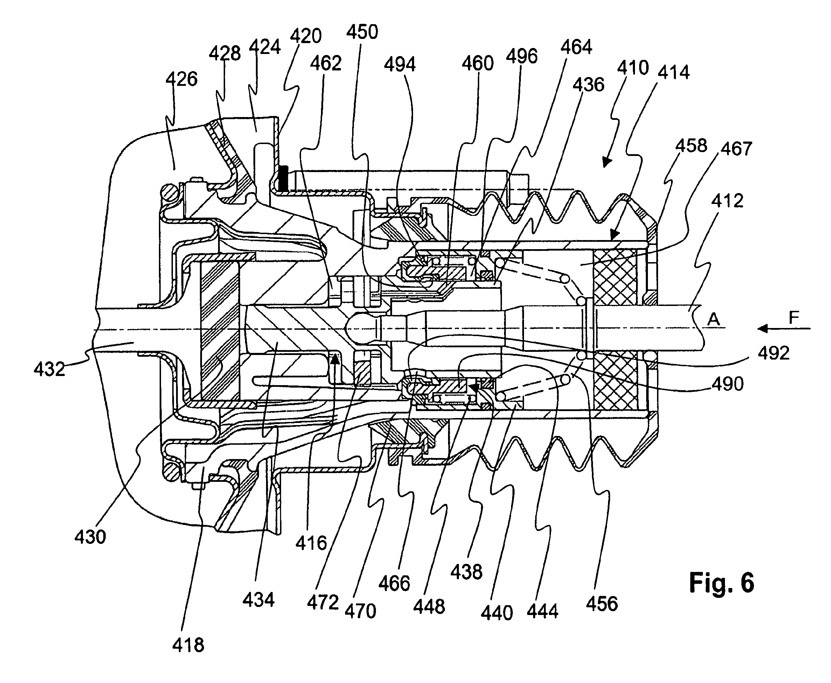

Figur 6 zeigt eine weitere Ausführungsform der Erfindung, bei der für gleichartige oder gleichwirkende Komponenten dieselben Bezugzeichen verwendet werden, wie vorangehend mit Bezug auf Figuren 1 bis 5, jedoch mit der Ziffer "4" vorangestellt.

Die Ausführungsform gemäß Figur 6 unterscheidet sich von den vorangehenden Ausführungsformen dadurch, dass statt eines balgartigen Ventilglieds 38 ein formstabiles Ventilglied 438 eingesetzt wird, das aus einem formstabilen Grundkörper 490 und einer diesen überziehenden Elastomerschicht 492 gebildet ist. Dieser ist über die Feder 448 relativ zum Halteelement 440 vorgespannt und in diesem über die Dichtlippe 494 dichtend geführt. Ferner weist der elastomere Überzug 492 die innere Dichtlippe 450 auf. Schließlich erkennt man noch, dass das Halteelement 438 mit einem Dichtring 496 versehen und so dichtend in dem Steuerventilgehäuse 418 aufgenommen ist. Zur Aufnahme der Rückstellfeder 456 weist das Halteelement 440 einen Innenschulterbereich auf.

Ansonsten funktioniert die Ausführungsform gemäß Figur 6 genauso, wie mit Bezug auf die vorangehend beschriebenen Ausführungsbeispielen geschildert.

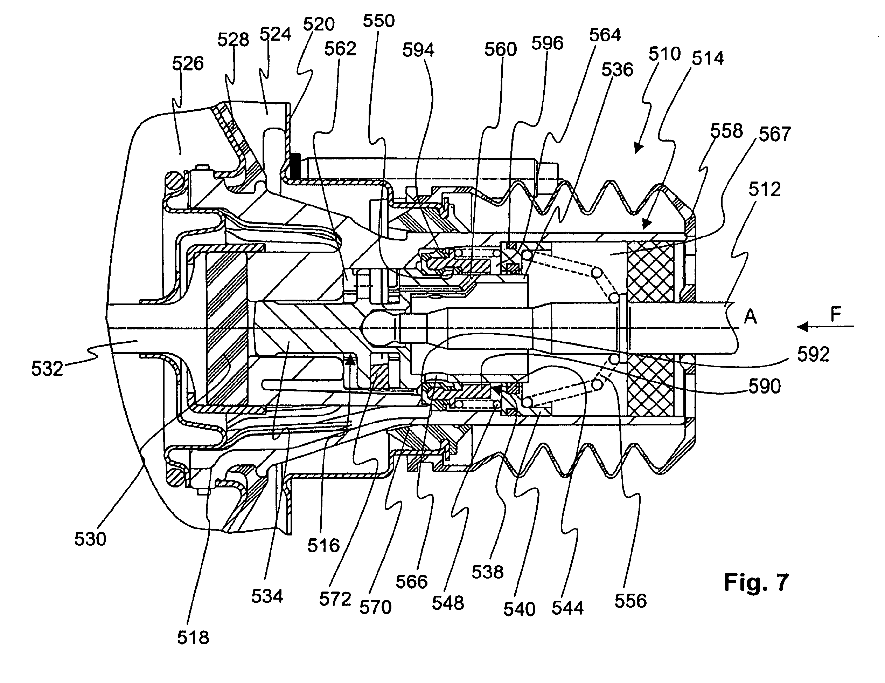

Figur 7 zeigt eine weitere Ausführungsform der Erfindung, wobei wiederum dieselben Bezugszeichen für gleichartige oder gleichwirkende Komponenten verwendet werden, wie bei den vorangehend beschriebenen Ausführungsbeispielen, jedoch mit der Ziffer "5" vorangestellt.

Die Ausführungsform gemäß Figur 7 unterscheidet sich von der Ausführungsform gemäß Figur 6 dadurch, dass das Halteelement 540 kürzer und ohne radial innen liegende Führungsfläche für das Ventilglied 538 ausgebildet ist. Das ist Ventilglied 538 stattdessen in dem Steuerventilgehäuse 518 dichtend geführt ist. Hierfür ist es erforderlich, die Innenoberfläche des Steuerventilgehäuses 518 in dem Führungsbereich mit einer entsprechenden der erforderlichen Dichtwirkung gerecht werdenden Oberflächengüte auszubilden.

## Patentansprüche

1. Unterdruckbremskraftverstärker (10) für eine Kraftfahrzeugbremsanlage, mit
- einem Krafteingangsglied (12), das mit einem Bremspedal koppelbar oder gekoppelt ist,
- einer Kammeranordnung (22) mit einer Unterdruckkammer (26) und einer Arbeitskammer (24), die über eine bewegliche Wand (28) voneinander getrennt sind,
- einem Steuerventil (14) mit einem Ventilglied (38) zum wahlweisen Verbinden und Trennen von Unterdruckkammer (26) und Arbeitskammer (24) und einem
- Kraftausgangsglied (32) zum Übertragen einer Ausgangskraft auf einen Hauptbremszylinder,
wobei das Krafteingangsglied (12) mit einer in dem Steuerventil (14) angeordneten Übertragungskolbenanordnung (16) kraftübertragend koppelbar oder gekoppelt ist, wobei nach Maßgabe einer Verlagerung der Übertragungskolbenanordnung (16) entlang einer Längsachse (A) über das Krafteingangsglied (12) das Steuerventil (14) ansteuerbar ist,
**dadurch gekennzeichnet, dass** die Übertragungskolbenanordnung (16) mit wenigstens einem Druckausgleichkanal (60) versehen ist, über den ein Druckausgleich an dem Ventilglied (38) erfolgt.

2. Unterdruckbremskraftverstärker (10) nach Anspruch 1,
**dadurch gekennzeichnet, dass** das Steuerventil (14) ein Steuerventilgehäuse (18) aufweist, wobei die Übertragungskolbenanordnung (16) in dem Steuerventilgehäuse (18) relativ zu diesem und zu dem Ventilglied (38) verlagerbar geführt ist.

3. Unterdruckbremskraftverstärker (10) nach Anspruch 2,
**dadurch gekennzeichnet, dass** die Übertragungskolbenanordnung (16) einen axialen Führungsabschnitt (36) aufweist, der in dem Ventilglied (38) dichtend geführt ist.

4. Unterdruckbremskraftverstärker (10) nach Anspruch 3,
**dadurch gekennzeichnet, dass** ein erster Druckausgleichkanal (60) in dem Führungsabschnitt (36) vorgesehen ist, der sich im Wesentlichen in axialer Richtung von einem mit der Arbeitskammer (24) verbundenen pneumatischen Bereich (62) in einen ersten von dem Ventilglied (38) begrenzten pneumatischen Bereich (64) erstreckt.

5. Unterdruckbremskraftverstärker (10) nach Anspruch 3 oder 4,
**dadurch gekennzeichnet, dass** ein zweiter Druckausgleichkanal (66) in dem Führungsabschnitt (36) vorgesehen ist, der sich im Wesentlichen in radialer Richtung von einem mit der Atmosphäre verbundenen pneumatischen Bereich (67) in einen zweiten von dem Ventilglied (38) begrenzten pneumatischen Bereich (68) erstreckt.

6. Unterdruckbremskraftverstärker (10) nach einem der Ansprüche 3 bis 5, **dadurch gekennzeichnet, dass** das Ventilglied (38) erste Dichtmittel (42) aufweist, über die der Führungsabschnitt (36) dichtend in dem Ventilglied (38) geführt ist.

7. Unterdruckbremskraftverstärker (10) nach einem der Ansprüche 3 bis 6, **dadurch gekennzeichnet, dass** das Ventilglied (38) in dem Steuerventilgehäuse (18) über ein Halteelement (40) gehalten ist, wobei der Führungsabschnitt (36) dichtend relativ zu dem Halteelement (40) geführt ist.

8. Unterdruckbremskraftverstärker (10) nach Anspruch 7,
**dadurch gekennzeichnet, dass** das Ventilglied (38) zumindest abschnittsweise in dem Steuerventilgehäuse (18) verlagerbar ist, wobei der verlagerbare Abschnitt über eine Rückstellfeder (48) in eine Ausgangsstellung vorgespannt ist.

9. Unterdruckbremskraftverstärker (410) nach Anspruch 8,
**dadurch gekennzeichnet, dass** das Ventilglied (438) ein formstabiles Trägerelement (490) mit einem elastomeren Überzug (492) aufweist, wobei.

10. Unterdruckbremskraftverstärker (10) nach einem der Ansprüche 3 bis 9, **dadurch gekennzeichnet, dass** ein erster Dichtsitz (54) an dem Steuerventilgehäuse zur Wechselwirkung mit dem Ventilglied vorgesehen ist und dass ein zweiter Dichtsitz (50) an einer Komponente von Übertragungskolbenanordnung (16) oder Ventilglied (38) zur Wechselwirkung mit der jeweils anderen Komponente von Übertragungskolbenanordnung (16) oder Ventilglied (38) vorgesehen ist.

11. Unterdruckbremskraftverstärker (10) nach einem der Ansprüche 3 bis 10, **dadurch gekennzeichnet, dass** der Führungsabschnitt (36) integral an der Übertragungskolbenanordnung (16) angeformt ist.

12. Unterdruckbremskraftverstärker (210) nach einem der Ansprüche 3 bis 10, **dadurch gekennzeichnet, dass** der Führungsabschnitt (236) als separates Bauteil getrennt von der Übertragungskolbenanordnung (216) ausgebildet, jedoch dichtend mit dieser verbunden ist.

13. Unterdruckbremskraftverstärker (210) nach Anspruch 12,
**dadurch gekennzeichnet, dass** der Führungsabschnitt (236) und die Übertragungskolbenanordnung (216) aus verschiedenen Materialien hergestellt sind.

14. Unterdruckbremskraftverstärker (210) nach Anspruch 12 oder 13,
**dadurch gekennzeichnet, dass** die Übertragungskolbenanordnung (216) eine Befestigungsformation (278) zum dichtenden Aufnehmen des Führungsabschnitts (238) aufweist.

15. Unterdruckbremskraftverstärker (210) nach Anspruch 14,
**dadurch gekennzeichnet, dass** zwischen der Übertragungskolbenanordnung (216) und dem Führungsabschnitt (236) im Bereich der Befestigungsformation (278) wenigstens ein Dichtelement (280) vorgesehen ist.

## Claims

1. Vacuum brake booster (10) for a motor vehicle brake system, having
- a force input element (12) that is connectable or connected to a brake pedal,
- a chamber arrangement (22) comprising a vacuum chamber (26) and a working chamber (24) that are separated from one another by a movable wall (28),
- a control valve (14) with a valve element (38) for selectively connecting and separating vacuum chamber (26) and working chamber (24) and
- a force output element (32) for transmitting an output force to a master cylinder,
wherein the force input element (12) is workingly connectable or connected to a transmission piston arrangement (16) disposed in the control valve (14), wherein the control valve (14) is settable in accordance with a displacement of the transmission piston arrangement (16) along a longitudinal axis (A) by means of the force input element (12),
**characterized in that** the transmission piston arrangement (16) is provided with at least one pressure compensation channel (60), by means of which a pressure compensation is effected at the valve element (38).

2. Vacuum brake booster (10) according to claim 1,
**characterized in that** the control valve (14) has a control valve housing (18), wherein the transmission piston arrangement (16) is guided in the control valve housing (18) so as to be displaceable relative thereto and to the valve element (38).

3. Vacuum brake booster (10) according to claim 2,
**characterized in that** the transmission piston arrangement (16) has an axial guide portion (36), which is guided sealingly in the valve element (38).

4. Vacuum brake booster (10) according to claim 3,
**characterized in that** a first pressure compensation channel (60) is provided in the guide portion (36) that extends substantially in axial direction from a pneumatic region (62) connected to the working chamber (24) into a first pneumatic region (64) delimited by the valve element (38).

5. Vacuum brake booster (10) according to claim 3 or 4,
**characterized in that** a second pressure compensation channel (66) is provided in the guide portion (36) that extends substantially in radial direction from a pneumatic region (67) connected to the atmosphere into a second pneumatic region (68) delimited by the valve element (38).

6. Vacuum brake booster (10) according to one of claims 3 to 5,
**characterized in that** the valve element (38) comprises first sealing means (42), by means of which the guide portion (36) is guided sealingly in the valve element (38).

7. Vacuum brake booster (10) according to one of claims 3 to 6,
**characterized in that** the valve element (38) is held in the control valve housing (18) by means of a retaining element (40), wherein the guide portion (36) is guided sealingly relative to the retaining element (40).

8. Vacuum brake booster (10) according to claim 7,
**characterized in that** the valve element (38) at least in portions is displaceable in the control valve housing (18), wherein the displaceable portion is preloaded into an initial position by means of a resetting spring (48).

9. Vacuum brake booster (410) according to claim 8,
**characterized in that** the valve element (438) comprises a dimensionally stable carrier element (490) with an elastomer coating (492).

10. Vacuum brake booster (10) according to one of claims 3 to 9,
**characterized in that** a first sealing seat (54) is provided on the control valve housing for interaction with the valve element and that a second sealing seat (50) is provided on a component of the transmission piston arrangement (16) or the valve element (38) for interaction with the respective other component of the transmission piston arrangement (16) or the valve element (38).

11. Vacuum brake booster (10) according to one of claims 3 to 10,
**characterized in that** the guide portion (36) is integrally formed on the transmission piston arrangement (16).

12. Vacuum brake booster (210) according to one of claims 3 to 10,
**characterized in that** the guide portion (236) is formed as a separate component separately from the transmission piston arrangement (16) but sealingly connected thereto.

13. Vacuum brake booster (210) according to claim 12,
**characterized in that** the guide portion (236) and the transmission piston arrangement (216) are manufactured from different materials.

14. Vacuum brake booster (210) according to claim 12 or 13,
**characterized in that** the transmission piston arrangement (216) comprises a fastening formation (278) for sealingly receiving the guide portion (236).

15. Vacuum brake booster (210) according to claim 14,
**characterized in that** at least one sealing element (280) is provided between the transmission piston arrangement (216) and the guide portion (236) in the region of the fastening formation (278).

## Revendications

1. Un servofrein à dépression (10) pour un système de freinage de véhicule automobile, comprenant
- un organe d'entrée de force (12) qui est accouplé ou peut être accouplé à une pédale de frein,
- un ensemble de chambres (22) comportant une chambre de dépression (26) et une chambre de travail (24) séparées l'une de l'autre par une paroi mobile (28),
- une soupape de commande (14) munie d'un organe de soupape (38) pour la liaison ou la séparation au choix de la chambre de dépression (26) et de la chambre de travail (24), et
- un élément de sortie de force (32) servant à transmettre une force de sortie à un cylindre de frein principal,
ledit organe d'entrée de force (12) étant accouplé ou pouvant être accouplé, avec transmission de force, à un ensemble piston de transmission (16) disposé dans la soupape de commande (14), la soupape de commande (14) pouvant être commandée en fonction d'un déplacement de l'ensemble piston de transmission (16) le long d'un axe longitudinal (A) par le biais de l'organe d'entrée de force (12),
**caractérisé en ce que** l'ensemble piston de transmission (16) est muni d'au moins un conduit compensateur de pression (60) permettant d'équilibrer la pression sur l'organe de soupape (38).

2. Un servofrein à dépression (10) selon la revendication 1,
**caractérisé en ce que** la soupape de commande (14) présente un carter de soupape de commande (18), l'ensemble piston de transmission (16) étant guidé de manière déplaçable dans le carter de soupape de commande (18) par rapport à ce dernier et à l'organe de soupape (38).

3. Un servofrein à dépression (10) selon la revendication 2,
**caractérisé en ce que** l'ensemble piston de transmission (16) présente un segment de guidage (36) axial qui est guidé de manière étanche dans l'organe de soupape (38).

4. Un servofrein à dépression (10) selon la revendication 3,
**caractérisé en ce qu'**un premier conduit compensateur de pression (60) est prévu dans le segment de guidage (36), lequel s'étend pour l'essentiel dans la direction axiale d'une zone pneumatique (62) reliée à la chambre de travail (24) à une première zone pneumatique (64) limitée par l'organe de soupape (38).

5. Un servofrein à dépression (10) selon la revendication 3 ou 4,
**caractérisé en ce qu'**un deuxième conduit compensateur de pression (66) est prévu dans le segment de guidage (36), lequel s'étend pour l'essentiel dans la direction radiale d'une zone pneumatique (67) reliée à l'atmosphère à deuxième zone pneumatique (68) limitée par l'organe de soupape (38).

6. Un servofrein à dépression (10) selon l'une des revendications 3 à 5,
**caractérisé en ce que** l'organe de soupape (38) présente des premiers moyens d'étanchéité (42) à travers lesquels est guidé de manière étanche le segment de guidage (36) dans l'organe de soupape (38).

7. Un servofrein à dépression (10) selon l'une des revendications 3 à 6,
**caractérisé en ce que** l'organe de soupape (38) est maintenu à l'aide d'un élément de maintien (40) dans le carter de soupape de commande (18), le segment de guidage (36) étant guidé de manière étanche par rapport à l'élément de maintien (40).

8. Un servofrein à dépression (10) selon la revendication 7,
**caractérisé en ce que** l'organe de soupape (38) est déplaçable pour le moins par endroits à l'intérieur du carter de soupape de commande (18), la section déplaçable étant précontrainte dans une position de départ par le biais d'un ressort de rappel (48).

9. Un servofrein à dépression (410) selon la revendication 8,
**caractérisé en ce que** l'organe de soupape (438) présente un élément porteur de forme stable (490) muni d'un revêtement élastomère (492).

10. Un servofrein à dépression (10) selon l'une des revendications 3 à 9,
**caractérisé en ce qu'**un premier siège étanche (54) est prévu sur le carter de la soupape de commande pour interagir avec l'organe de soupape (38) et **en ce qu'**un deuxième siège étanche (50) est prévu sur un composant de l'ensemble piston de transmission (16) ou de l'organe de soupape (38) pour interagir respectivement avec l'autre composant de l'ensemble piston de transmission (16) ou de l'organe de soupape (38).

11. Un servofrein à dépression (10) selon l'une des revendications 3 à 10,
**caractérisé en ce que** le segment de guidage (36) est intégralement formé sur l'ensemble piston de transmission (16).

12. Un servofrein à dépression (210) selon l'une des revendications 3 à 10,
**caractérisé en ce que** le segment de guidage (236) est conçu comme un élément distinct séparé de l'ensemble piston de transmission (216) auquel il est cependant relié de manière étanche.

13. Un servofrein à dépression (210) selon la revendication 12,
**caractérisé en ce que** le segment de guidage (236) et l'ensemble piston de transmission (216) sont réalisés à partir de différents matériaux.

14. Un servofrein à dépression (210) selon la revendication 12 ou 13,
**caractérisé en ce que** l'ensemble piston de transmission (216) présente une formation de fixation (278) pour le logement étanche du segment de guidage (238).

15. Un servofrein à dépression (210) selon la revendication 14,
**caractérisé en ce qu'**au moins un élément d'étanchéité (280) est prévu dans la zone de la formation de fixation (278) entre l'ensemble piston de transmission (216) et le segment de guidage (236).
